(19) Europäisches Patentamt
European Patent Office
Office européen des brevets

(11) Veröffentlichungsnummer: **0 077 300**
**B1**

(12) # EUROPÄISCHE PATENTSCHRIFT

(45) Veröffentlichungstag der Patentschrift: **13.02.85**

(51) Int. Cl.⁴: **C 07 F 7/22**, A 01 N 55/04

(21) Anmeldenummer: **82810416.6**

(22) Anmeldetag: **07.10.82**

(54) **Triorganozinnhydantoin-Verbindungen, Verfahren zu ihrer Herstellung und ihre Verwendung in der Schädlingsbekämpfung.**

(30) Priorität: **13.10.81 CH 6543/81**
**11.08.82 CH 4808/82**

(43) Veröffentlichungstag der Anmeldung: **20.04.83 Patentblatt 83/16**

(45) Bekanntmachung des Hinweises auf die Patenterteilung: **13.02.85 Patentblatt 85/7**

(84) Benannte Vertragsstaaten: **AT BE CH DE FR GB IT LI NL**

(56) Entgegenhaltungen:
**CH - A - 524 312**
**FR - A - 2 342 728**
**NL - C - 107 548**

(73) Patentinhaber: **CIBA-GEIGY AG, Postfach, CH-4002 Basel (CH)**

(72) Erfinder: **Wehner, Wolfgang, Dr., Wetzbach 34, D-6144 Zwingenberg (DE)**
Erfinder: **Ackermann, Peter, Dr., Hangellmattweg 113, CH-4148 Pfeffingen (CH)**

**EP 0 077 300 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft Triorganozinnhydantoin-Verbindungen, Verfahren zu ihrer Herstellung und ihre Verwendung in der Schädlingsbekämpfung.

Die Triorganozinnhydantoin-Verbindungen haben die Formel

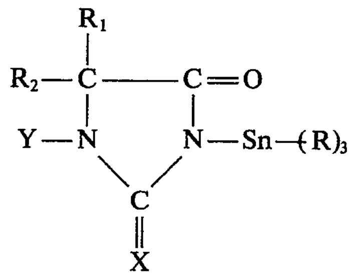

(I)

worin

R $C_1$—$C_8$-Alkyl, $C_5$—$C_8$-Cycloalkyl, Phenyl oder

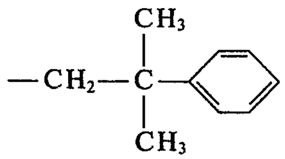

$R_1$ und $R_2$ je Wasserstoff, $C_1$—$C_8$-Alkyl, Phenyl, Hydroxyphenyl oder zusammen $C_5$—$C_7$-Alkylen oder Sauerstoff,

X Sauerstoff oder Schwefel und

Y Wasserstoff oder

$$—Sn—(R)_3$$

bedeuten.

Die $C_1$—$C_8$-Alkylgruppen können geradkettig oder verzweigt sein. Beispiele solcher Gruppen sind u. a.: Methyl, Äthyl, Propyl, Isopropyl, n-, i-, sek.-, tert.-Butyl, n-Pentyl, n-Hexyl, n-Heptyl, n-Octyl und deren Isomere, wie z. B. 2-Äthylhexyl.

Die $C_5$—$C_8$-Cycloalkylgruppen sind u. a.: Cyclopentyl, Cyclohexyl oder Cyclooctyl, insbesondere Cyclohexyl.

Bevorzugt sind Verbindungen der Formel I, worin

R $C_1$—$C_4$-Alkyl, $C_5$—$C_6$-Cycloalkyl, Phenyl oder

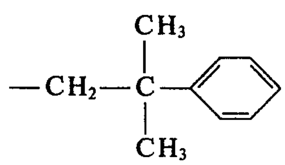

$R_1$ und $R_2$ je Methyl, Phenyl oder zusammen Sauerstoff,

X Sauerstoff oder Schwefel und

Y Wasserstoff oder

$$—Sn—(R)_3$$

bedeuten.

Insbesondere bevorzugt sind Verbindungen der Formel I, worin

R n-Butyl, Cyclohexyl, Phenyl oder

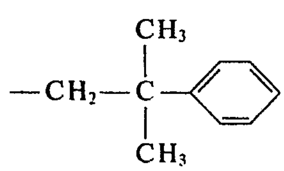

$R_1$ und $R_2$ je Methyl, Phenyl oder zusammen Sauerstoff,

X Sauerstoff oder Schwefel und

Y Wasserstoff oder

$$-Sn-(R)_3$$

bedeuten.

Ganz besonders bevorzugt sind aber Verbindungen der Formel I, worin
R n-Butyl, Cyclohexyl, Phenyl oder

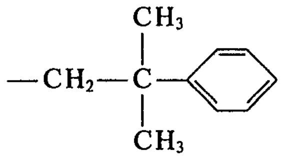

$R_1$ und $R_2$ je Methyl oder Phenyl,
X Sauerstoff oder Schwefel und Y Wasserstoff oder

$$-Sn-(R)_3$$

bedeuten.

Die Verbindungen der Formel I können nach an sich bekannten Methoden z. B. wie folgt hergestellt werden:

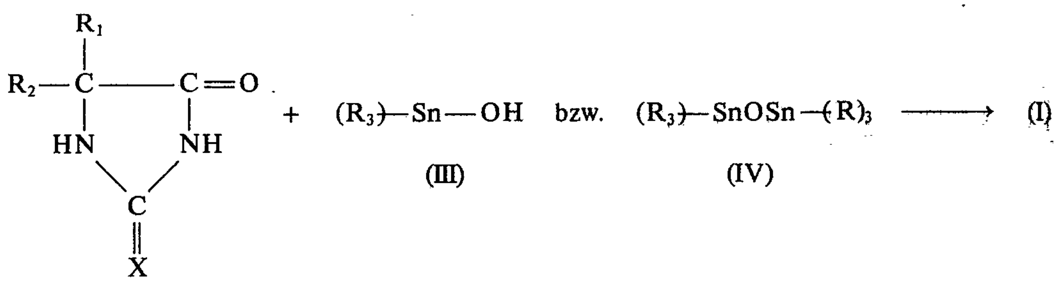

(III) (IV) (I)

(II)

In den Formeln II, III und IV haben R, $R_1$, $R_2$ und X die für die Formel I angegebene Bedeutung.

Das Verfahren wird zweckmäßig bei einer Temperatur zwischen 30 bis 180°C, bei normalem oder leicht reduziertem Druck und vorzugsweise in Gegenwart eines gegenüber den Reaktionsteilnehmern inerten Lösungs- oder Verdünnungsmittels durchgeführt.

Als Lösungs- oder Verdünnungsmittel eignen sich z. B. halogenierte oder nicht halogenierte Kohlenwasserstoffe wie Petroläther, Toluol, Chloroform oder Methylenchlorid; Alkohole wie Methanol und Äthanol oder Isopropanol; Äther und ätherartige Verbindungen wie Diäthyläther, Dioxan und Tetrahydrofuran; Ketone wie Aceton, Cyclohexanon oder Methyläthylketon. Die Ausgangsstoffe der Formeln II, III und IV sind bekannt und können nach bekannten Methoden hergestellt werden.

Die Verbindungen der Formel I eignen sich zur Bekämpfung von verschiedenartigen Schädlingen an Tieren und Pflanzen. Sie haben auch pflanzenwuchsregulierende Wirkung.

Insbesondere eignen sich die Verbindungen der Formel I zur Bekämpfung aller Entwicklungsstadien von phytopathogenen und tierparasitären Insekten z. B. der Ordnungen Lepidoptera, Coleoptera, Homoptera, Heteroptera, Diptera, Thysanoptera, Orthoptera, Anoplura, Siphonaptera, Mallophaga, Thysanura, Isoptera, Psocoptera und Hymenoptera und phytopathogenen und tierparasitären Milben und Zwecken der Ordnung Acarina.

Vor allem eignen sich Verbindungen der Formel I zur Bekämpfung von fressenden Insekten, wie z. B. Anthonomus grandis und von pflanzenschädigen Milben, wie z. B. Tetranychus urticae und Tetranychus cinnabarinus.

Wirkstoffe der Formel I zeigen auch eine sehr günstige Wirkung gegen Fliegen, wie z. B. Musca Domestika und Mückenlarven. Daneben zeichnen sich die Verbindungen der Formel I durch eine breite ovizide und ovolarvizide Wirkung aus.

Wirkstoffe der Formel I haben auch eine gute fungizide Wirkung. So wirken Verbindungen der Formel I gegen die den folgenden Klassen angehörenden phytopathogenen Pilze: Ascomycetes (z. B. Erysiphaceae, Fusarium, Helminthosporium): Basidiomycetes wie Puccinia, Rhizoctonia, Tilletia, Hemileia; Fungi imperfecti (z. B. Cercospora, Botrytis, Septoria); Phycomycetes wie Phytophthora, Überdies wirken die Verbindungen der Formel I systemisch. Die Verbindungen der Formel I werden vorteilhaft als Beizmittel zur Behandlung von Saatgut und Vorrat (Früchte, Knollen, Körner) und Pflanzenstecklingen zum Schutz vor Pilzinfektionen sowie gegen im Erdboden auftretende phytopathogene Pilze eingesetzt.

Die Verbindungen der Formel I werden in unveränderter Form oder vorzugsweise zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Gießen werden gleich wie die Art der Mittel den angestrebten Zielen und den gegebenen Verhältnissen entsprechend gewählt.

Die Formulierungen, d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Äther und Ester, wie Äthanol, Äthylenglykol, Äthylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie expoxidiertes Kokosnußöl oder Sojaöl; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$—$C_{22}$), wie z. B. die Na- oder K-Salze der Öl- oder Stearinsäure, oder von natürlichen Fettsäuregemischen, die z. B. aus Kokosnuß- oder Talgöl gewonnen werden können. Ferner sind auch die Fettsäure-methyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxid-Addukten. Die sulfonierten Benzimidazolderivate enthalten vorzugsweise 2 Sulfonsäuregruppen und einen Fettsäurerest mit 8—22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4—14)-Äthylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Äthylenglykoläthergruppen und 10 bis 100 Propylenglykoläthergruppen enthaltenden Polyäthylenoxid-Addukte an Polypropylenglykol, Äthylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykoleinheiten.

Als Beispiele nichtionischer Tenside seien Nonylphenolpolyäthoxyäthanole, Ricinusölpolyglycoläther, Polypropylen-Polyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht. Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z. B. das Stearyltrimethylammoniumchlorid oder das Benzyldi(2-chloräthyl)-äthylammoniumbromid.

Die in der Formulierungstechnik gebräuchlichen Tenside sind u. a. in folgender Publikation beschrieben:

»Mc Cutcheon's Detergents and Emulsifiers Annual« MC Publishing Corp., Ridgewood, New Jersey, 1979.

Die pestiziden Zubereitungen enthalten in der Regel 0,1 bis 99%, insbesondere 0,1 bis 95%, Wirkstoff der Formel I, 1 bis 99,9% eines festen oder flüssigen Zusatzstoffes und 0 bis 25%, insbesondere 0,1 bis 25%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele für flüssige Wirkstoffe der Formel I (% = Gewichtsprozent)

1. Emulsions-Konzentrate

| | a) | b) | c) |
|---|---|---|---|
| Wirkstoff | 20% | 40% | 50% |
| Ca-Dodecylbenzolsulfonat | 5% | 8% | 5,8% |
| Ricinusöl-polyäthylenglykoläther (36 Mol AeO) | 5% | – | – |
| Tributylphenol-polyäthylenglykoläther (30 Mol AeO) | – | 12% | 4,2% |
| Cyclohexanon | – | 15% | 20% |
| Xylolgemisch | 70% | 25% | 20% |

Aus solchen Konzentraten können durch Verdünnen mit Wasser Emulsionen jeder gewünschten Konzentration hergestellt werden.

2. Lösungen

| | a) | b) | c) | d) |
|---|---|---|---|---|
| Wirkstoff | 80% | 10% | 5% | 95% |
| Äthylenglykol-monomethyläther | 20% | – | – | – |
| Polyäthylenglykol M G 400 | – | 70% | – | – |
| N-Methyl-2-pyrrolidon | – | 20% | – | – |
| Epoxidiertes Kokosnußöl | – | – | 1% | 5% |
| Benzin (Siedegrenzen 160–190°C) | – | – | 94% | – |

Die Lösungen sind zur Anwendung in Form kleinster Tropfen geeignet.

3. Granulate

| | a) | b) |
|---|---|---|
| Wirkstoff | 5% | 10% |
| Kaolin | 94% | – |
| Hochdisperse Kieselsäure | 1% | |
| Attapulgit | – | 90% |

Der Wirkstoff wird in Methylenchlorid gelöst, auf den Träger aufgesprüht und das Lösungsmittel anschließend im Vakuum abgedampft.

4. Stäubemittel

| | a) | b) |
|---|---|---|
| Wirkstoff | 2% | 5% |
| Hochdisperse Kieselsäure | 1% | 5% |
| Talkum | 97% | – |
| Kaolin | – | 90% |

Durch inniges Vermischen der Trägerstoffe mit dem Wirkstoff erhält man gebrauchsfertige Stäubemittel.

Formulierungsbeispiele für feste Wirkstoffe der Formel I (%= Gewichtsprozent)

5. Spritzpulver

| | a) | b) |
|---|---|---|
| Wirkstoff | 20% | 60% |
| Na-Ligninsulfonat | 5% | 5% |
| Na-Laurylsulfat | 3% | – |
| Na-Diisobutylnaphthalinsulfonat | – | 6% |
| Octylphenolpolyäthylenglykoläther (7–8 Mol AeO) | – | 2% |
| Hochdisperse Kieselsäure | 5% | 27% |
| Kaolin | 67% | – |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

6. Emulsions-Konzentrat

| | |
|---|---|
| Wirkstoff | 10% |
| Octylphenolpolyäthylenglykoläther (4–5 Mol AeO) | 3% |
| Ca-Dodecylbenzolsulfonat | 3% |
| Ricinusölpolyglykoläther (36 Mol AeO) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

7. Stäubemittel

| | a) | b) |
|---|---|---|
| Wirkstoff | 5% | 8% |
| Talkum | 95% | – |
| Kaolin | – | 92% |

Man erhält anwendungsfertige Stäubemittel, indem der Wirkstoff mit dem Träger vermischt und auf einer geeigneten Mühle vermahlen wird.

8. Extruder Granulat

| | |
|---|---|
| Wirkstoff | 10% |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschließend im Luftstrom getrocknet.

9. Umhüllungs-Granulat

| | |
|---|---|
| Wirkstoff | 3% |
| Polyäthylenglykol (M G 200) | 3% |
| Kaolin | 94% |

Der fein gemahlene Wirkstoff wird in einem Mischer auf das mit Polyäthylenglykol angefeuchtete Kaolin gleichmäßig aufgetragen. Auf diese Weise erhält man staubfreie Umhüllungs-Granulate.

10. Suspensions-Konzentrat

| | |
|---|---|
| Wirkstoff | 40% |
| Äthylenglykol | 10% |
| Nonylphenolpolyäthylenglykoläther (15 Mol AeO) | 6% |
| Na-Ligninsulfonat | 10% |
| Carboxymethylcellulose | 1% |
| 37%ige wäßrige Formaldehyd-Lösung | 0,2% |
| Silikonöl in Form einer 75%igen wäßrigen Emulsion | 0,8% |
| Wasser | 32% |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Beispiel 1

### Herstellung von 1,3-Bis-Triphenylzinn-5,5-dimethylhydantoin

Eine Suspension aus 64,1 g 5,5-Dimethylhydantoin und 367,0 g Triphenylzinnhydroxid in 400 ml Toluol wird 5 Stunden am Rückfluß gekocht, wobei das entstehende Reaktionswasser azeotrop abdestilliert wird. Nach dem Abkühlen wird die Lösung klarfiltriert und im Vakuum von flüchtigen Bestandteilen befreit.

Man erhält die Verbindung der Formel

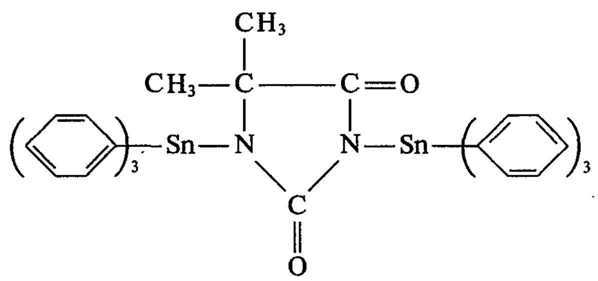

in kristalliner Form mit einem Schmelzpunkt von 138–140°C. Auf analoge Weise werden auch folgende Verbindungen hergestellt:

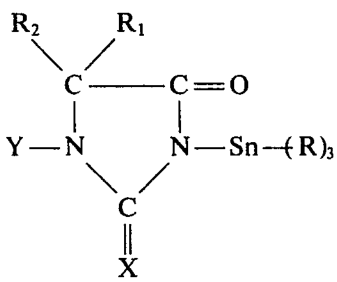

| R | $R_1$ | $R_2$ | X | Y | Physikalische Daten |
|---|---|---|---|---|---|
| 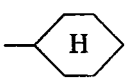 | $CH_3$ | $CH_3$ | O | $-Sn-(R)_3$ | Smp.: 245–248°C |
| n-$C_4H_9$ | H | H | S | $-Sn-(R)_3$ | viskoses Öl |
| n-$C_4H_9$ | H | H | O | $-Sn-(R)_3$ | viskoses Öl |
| n-$C_4H_9$ | $CH_3$ | $CH_3$ | O | H | Smp.: 50–51°C |
| 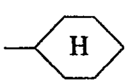 | $CH_3$ | $CH_3$ | O | H | Smp. 222–224°C |
| n-$C_4H_9$ | 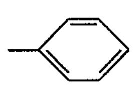 | 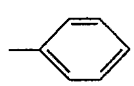 | O | H | Smp.: 38–39°C |
| 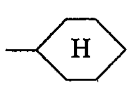 | 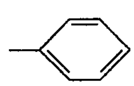 | 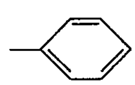 | O | H | Smp.: 198–200°C |
| n-$C_4H_9$ | 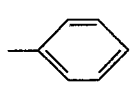 | 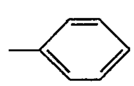 | O | $-Sn-(R)_3$ | viskoses Öl |
| n-$C_4H_9$ | 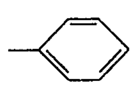 | 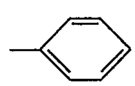 | S | H | Smp.: 58–60°C |
| n-$C_4H_9$ | 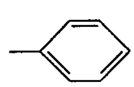 | 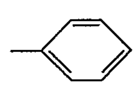 | S | $-Sn-(R)_3$ | viskoses Öl |

Fortsetzung

| R | $R_1$ | $R_2$ | X | Y | Physikalische Daten |
|---|---|---|---|---|---|
| $n\text{-}C_4H_9$ | $CH_3$ | $CH_3$ | O | $-Sn-(R)_3$ | viskoses Öl |
| $n\text{-}C_4H_9$ | $-(CH_2)_5-$ | $-(C_2H)_5-$ | O | H | Smp.: 80–82°C |
| $n\text{-}C_4H_9$ | —O— | —O— | O | $-Sn-(R)_3$ | viskoses Öl |
| 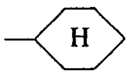 | —O— | —O— | O | $-Sn-(R)_3$ | Smp.: 217–219°C |
| 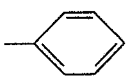 | —O— | —O— | O | H | Smp.: 180–182°C |
| 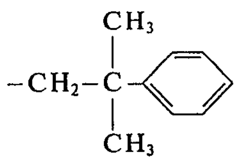 | —O— | —O— | O | $-Sn-(R)_3$ | Smp.: 115–116°C |
| 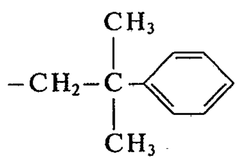 | $CH_3$ | $CH_3$ | O | H | |
| 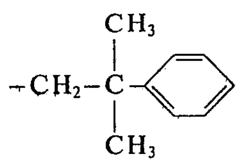 | $CH_3$ | $CH_3$ | O | $-Sn-(R)_3$ | |
| 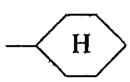 | 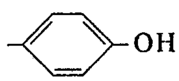 | H | O | $-Sn-(R)_3$ | |
| 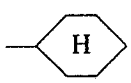 | 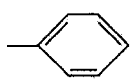 | 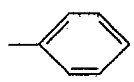 | O | $-Sn-(R)_3$ | |
| 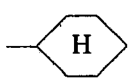 | 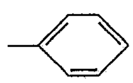 | 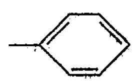 | S | H | |
| 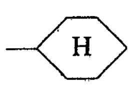 | 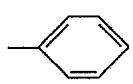 | 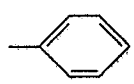 | S | $-Sn-(R)_3$ | |

## Beispiel 2

### Insektizide Wirkung gegen Anthonomus grandis

Baumwollpflanze in 4- bis 5-Blattstadium werden mit einer Versuchslösung enthaltend 25 resp. 50 g des zu prüfenden Wirkstoffes pro 100 l Wasser bis zur Tropfnässe besprüht.

Nach dem Antrocknen des Spritzbelages werden die Pflanzen mit je 5 Anthonomus grandis Käfern besetzt. Man verwendet pro Wirkstoff und pro Konzentration zwei Pflanzen.

Eine Auswertung der erzielten Abtötungsrate erfolgt nach 24, 48 und 120 Stunden. Die Versuche wurden bei 24°C und bei 60% relativer Luftfeuchtigkeit durchgeführt. Verbindungen gemäß dem Herstellungsbeispiel zeigen Wirkung gegen Anthonomus grandis.

## Beispiel 3

### Wirkung gegen pflanzenschädigende Akariden: Tetranychus urticae (OP-sensible) und Tetranychus cinnabarinus (OP-tolerant)

Die Primärblätter von Phaseolus vulgaris Pflanzen werden 16 Stunden vor dem Versuch auf akarizide Wirkung mit einem infestierten Blattstück aus einer Massenzucht von Tetranychus urticae (OP-sens.) oder Tetranychus cinnabarinus (OP-tol.) belegt. (Die Toleranz bezieht sich auf die Verträglichkeit von Diazinon).

Die so behandelten infestierten Pflanzen werden mit einer Versuchslösung enthaltend 400 oder 200 ppm der zu prüfenden Verbindung bis zur Tropfnässe besprüht.

Nach 24 Stunden und wiederum nach 7 Tagen werden Imagines und Larven (alle beweglichen Stadien) unter dem Binokular auf lebende und tote Individuen ausgewertet.

Man verwendet pro Konzentration und pro Testspezies eine Pflanze. Während des Versuchsverlaufs standen die Pflanzen in Gewächshauskabinen bei 25°C.

Innerhalb der oben angegebenen Konzentrationsgrenzen zeigen Verbindungen gemäß dem Hestellungsbeispiel 100%ige Wirkung gegen Individuen der Spezies Tetranychus urticae und Tetranychus cinnabarinus.

## Beispiel 4

### Wirkung gegen Botrytis cinerea auf Puffbohnen

Zirka 10 cm hohe Puffbohnenpflanzen werden mit einer aus Spritzpulver des Wirkstoffes hergestellten Spritzbrühe (0,02% Aktivsubstanz) besprüht. Nach 24 Stunden werden die behandelten Pflanzen mit einer Konidiensuspension des Pilzes infiziert. Nach einer Inkubation der infizierten Pflanzen während 2–3 Tagen bei 95–100% relativer Luftfeuchtigkeit und 21 °C erfolgt die Beurteilung des Pilzbefalls Verbindungen gemäß dem Herstellungsbeispiel wirken 100%ig gegen Botrytis cinerea.

## Beispiel 5

### Residual-protektive Wirkung gegen Venturia inaequalis auf Apfeltrieben

Apfelstecklinge mit 10–20 cm langen Frischtrieben werden mit einer aus Spritzpulver des Wirkstoffes hergestellten Spritzbrühe (0,06% Aktivsubstanz) besprüht. Nach 24 Stunden werden die behandelten Pflanzen mit einer Konidiensuspension des Pilzes infiziert. Die Pflanzen werden dann während 5 Tagen bei 90–100% relativer Luftfeuchtigkeit inkubiert und während 10 weiteren Tagen in einem Gewächshaus bei 20–24°C aufgestellt. Der Schorfbefall wird 15 Tage nach der Infektion beurteilt. Verbindungen gemäß dem Herstellungsbeispiel hemmen den Krankheitsbefall auf weniger als 10%. Unbehandelte infizierte Triebe zeigen einen 100%igen Venturia Befall.

## Beispiel 6

### Wirkung gegen Cercospora arachidicola auf Erdnußpflanzen

#### a) Residual-protektive Wirkung

10–15 cm hohe Erdnußpflanzen werden mit einer aus Spritzpulver der Wirksubstanz hergestellten Spritzbrühe (0,006% Aktivsubstanz) besprüht und 48 Stunden später mit einer Konidiensuspension des Pilzes infiziert. Die infizierten Pflanzen werden während 72 Stunden bei ca. 21 °C und hoher Luftfeuchtigkeit inkubiert und anschließend bis zum Auftreten der typischen Blattflecken in einem Gewächshaus aufgestellt. Die Beurteilung der fungiziden Wirkung erfolgt 12 Tage nach der Infektion basierend auf Anzahl und Größe der auftretenden Flecken.

#### b) Systemische Wirkung

Zu 10–15 cm hohen Erdnußpflanzen wird eine aus Spritzpulver des Wirkstoffes hergestellte Spritzbrühe gegossen (0,06% Aktivsubstanz bezogen auf das Endvolumen). Nach 48 Stunden werden die behandelten Pflanzen mit einer Konidiensuspension des Pilzes infiziert und 72 Stunden bei ca. 21 °C und hoher Luftfeuchtigkeit inkubiert. Anschließend werden die Pflanzen im Gewächshaus aufgestellt und nach 11 Tagen der Pilzbefall beurteilt.

Im Vergleich zu unbehandelten, aber infizierten Kontrollpflanzen (Anzahl und Größe der Flecken = 100%), zeigen Erdnußpflanzen, die mit Wirkstoffen gemäß dem Herstellungsbeispiel behandelt wurden, einen stark reduzierten Cercospora-Befall.

**Patentansprüche für die Vertragsstaaten: BE – CH – DE – FR – GB – IT – LI – NL**

1. Triorganozinnhydantoin-Verbindungen der Formel

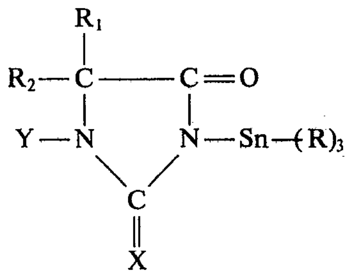

(I)

worin
R $C_1$–$C_8$-Alkyl, $C_5$–$C_8$-Cycloalkyl, Phenyl oder

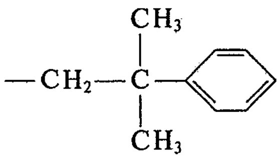

$R_1$ und $R_2$ je Wasserstoff, $C_1$–$C_8$-Alkyl, Phenyl, Hydroxyphenyl oder zusammen $C_5$–$C_7$-Alkylen oder Sauerstoff,
X Sauerstoff oder Schwefel und
Y Wasserstoff oder

$-Sn-(R)_3$

bedeuten.

2. Eine Verbindung gemäß Anspruch 1, worin R $C_1$–$C_4$-Alkyl, $C_5$–$C_6$-Cycloalkyl, Phenyl oder

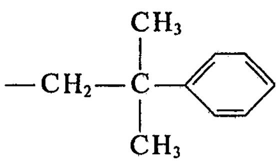

$R_1$ und $R_2$ je Methyl, Phenyl oder zusammen Sauerstoff,
X Sauerstoff oder Schwefel und
Y Wasserstoff oder

$-Sn-(R)_3$

bedeuten.

3. Eine Verbindung gemäß Anspruch 2, worin R n-Butyl, Cyclohexyl, Phenyl oder

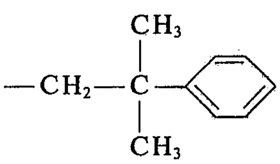

$R_1$ und $R_2$ je Methyl, Phenyl oder zusammen Sauerstoff,
X Sauerstoff oder Schwefel und
Y Wasserstoff oder

$-Sn-(R)_3$

bedeuten.

4. Eine Verbindung gemäß Anspruch 3, worin R n-Butyl, Cyclohexyl, Phenyl oder

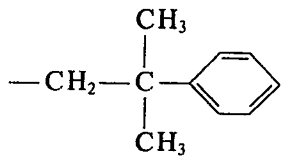

$R_1$ und $R_2$ je Methyl oder Phenyl,
X Sauerstoff oder Schwefel und
Y Wasserstoff oder

$$-Sn-(R)_3$$

bedeuten.

5. Die Verbindung gemäß Anspruch 4 der Formel

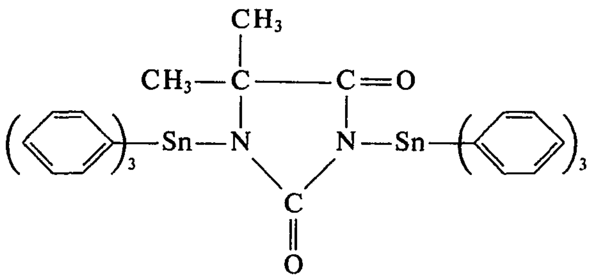

6. Die Verbindung gemäß Anspruch 4 der Formel

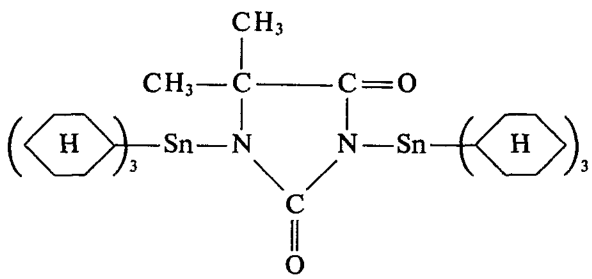

7. Die Verbindung gemäß Anspruch 4 der Formel

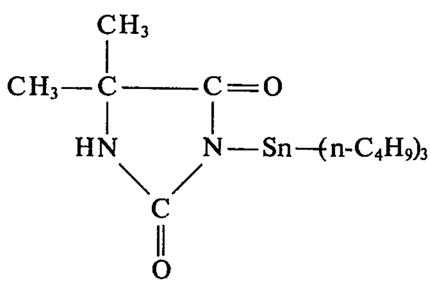

8. Die Verbindung gemäß Anspruch 4 der Formel

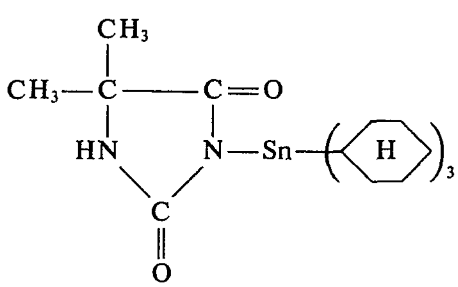

9. Die Verbindung gemäß Anspruch 4 der Formel

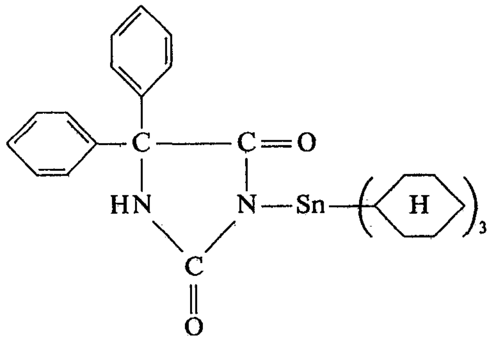

10. Die Verbindung gemäß Anspruch 4 der Formel

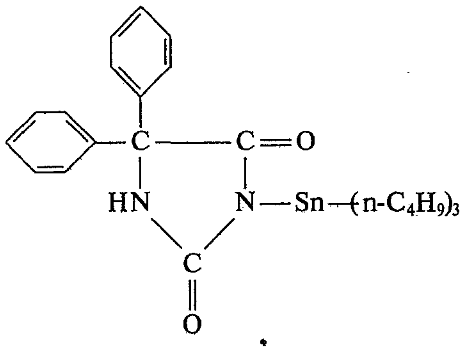

11. Die Verbindung gemäß Anspruch 4 der Formel

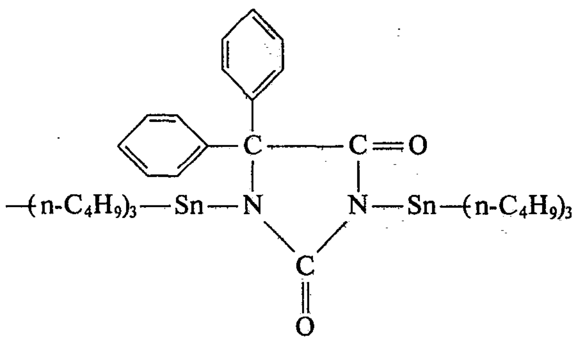

12. Die Verbindung gemäß Anspruch 4 der Formel

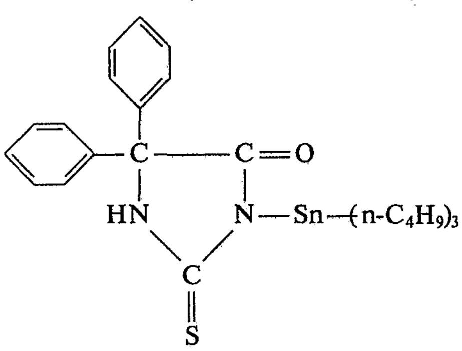

13. Die Verbindung gemäß Anspruch 4 der Formel

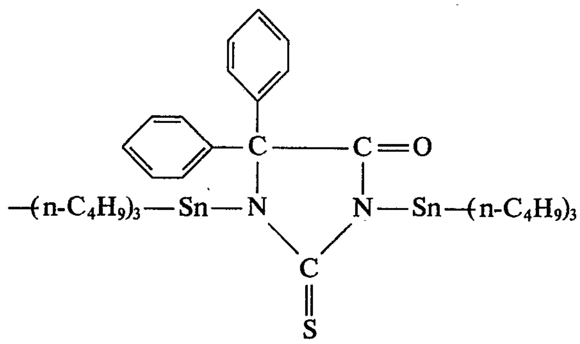

14. Die Verbindung gemäß Anspruch 4 der Formel

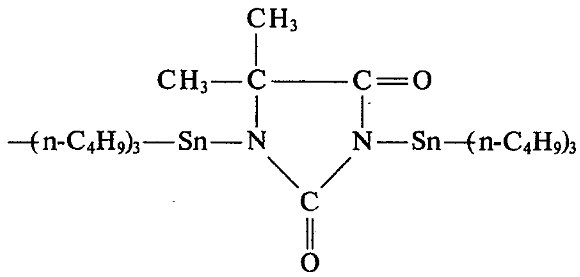

15. Die Verbindung gemäß Anspruch 3 der Formel

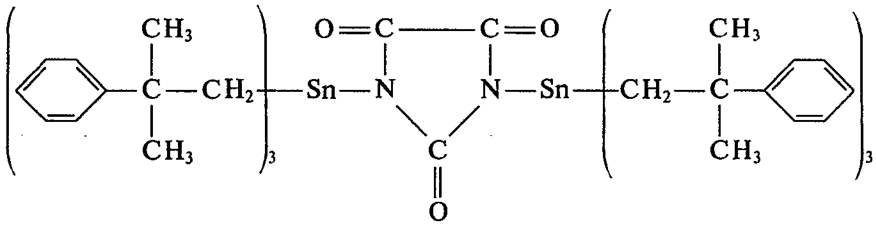

16. Die Verbindung gemäß Anspruch 3 der Formel

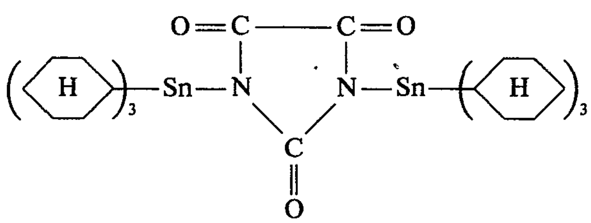

17. Verfahren zur Herstellung von Verbindungen gemäß Anspruch 1 dadurch gekennzeichnet, daß man eine Verbindung der Formel

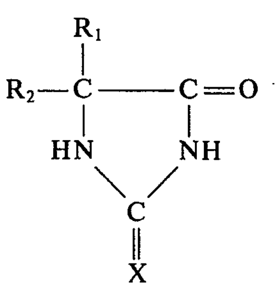

mit einer Verbindung der Formel

$$HO-Sn-(R)_3 \quad \text{bzw.} \quad (R)_3-Sn-O-Sn-(R)_3$$

reagieren läßt, worin R, $R_1$, $R_2$ und X die von Anspruch 1 angegebene Bedeutung haben.

18. Ein Schädlingsbekämpfungsmittel, welches als aktive Komponente eine Verbindung gemäß Anspruch 1 enthält.

19. Die Verwendung einer Verbindung gemäß Anspruch 1 zur Bekämpfung von Schädlingen an Tieren und Pflanzen.

20. Die Verwendung gemäß Anspruch 19 zur Bekämpfung von Insekten und Vertretern der Ordnung Akarina.

21. Die Verwendung gemäß Anspruch 19 zur Bekämpfung von phytopathogenen Pilzen.

**Patentansprüche für den Vertragsstaat: AT**

1. Ein Schädlingsbekämpfungsmittel, welches neben flüssigen und festen Zusatzstoffen als aktive Komponente eine Triorganozinnhydantoin-Verbindung der Formel

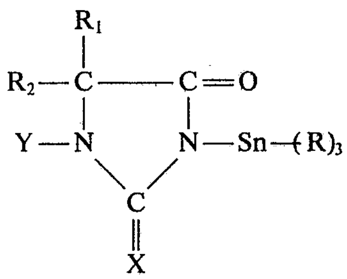

enthält, worin
R $C_1$—$C_8$-Alkyl, $C_5$—$C_8$-Cycloalkyl, Phenyl oder

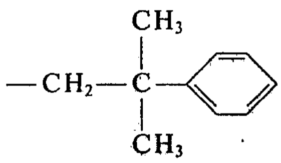

$R_1$ und $R_2$ je Wasserstoff, $C_1$—$C_8$-Alkyl, Phenyl, Hydroxyphenyl oder zusammen $C_5$—$C_7$-Alkylen oder Sauerstoff,
X Sauerstoff oder Schwefel und
Y Wasserstoff oder

$-Sn-(R)_3$

bedeuten.

2. Ein Mittel gemäß Anspruch 1, worin in der Formel der aktiven Komponente R $C_1$—$C_4$-Alkyl, $C_5$—$C_6$-Cycloalkyl, Phenyl oder

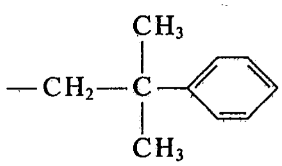

$R_1$ und $R_2$ je Methyl, Phenyl oder zusammen Sauerstoff,
X Sauerstoff oder Schwefel und
Y Wasserstoff oder

$-Sn-(R)_3$

bedeuten.

3. Ein Mittel gemäß Anspruch 2, worin in der Formel der aktiven Komponente R n-Butyl, Cyclohexyl, Phenyl oder

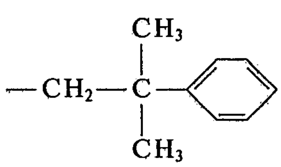

$R_1$ und $R_2$ je Methyl, Phenyl oder zusammen Sauerstoff,
X Sauerstoff oder Schwefel und
Y Wasserstoff oder

$$-Sn-(R)_3$$

bedeuten.

4. Ein Mittel gemäß Anspruch 3, worin in der Formel der aktiven Komponente R n-Butyl, Cyclohexyl, Phenyl oder

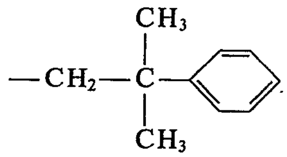

$R_1$ und $R_2$ je Methyl oder Phenyl,
X Sauerstoff oder Schwefel und
Y Wasserstoff oder

$$-Sn-(R)_3$$

bedeuten.

5. Ein Mittel gemäß Anspruch 4, welches als aktive Komponente die Verbindung der Formel

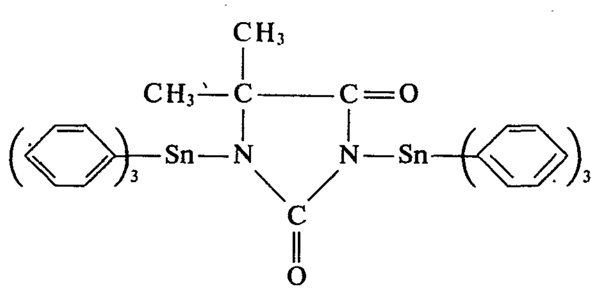

enthält.

6. Ein Mittel gemäß Anspruch 4, welches als aktive Komponente die Verbindung der Formel

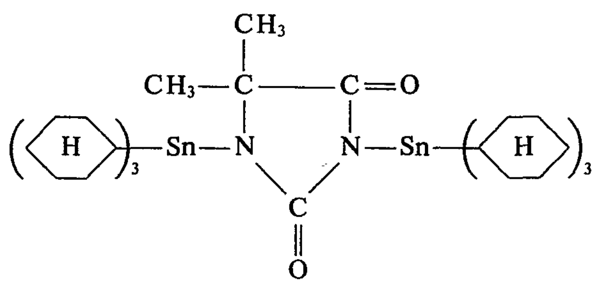

enthält.

7. Ein Mittel gemäß Anspruch 4, welcher als aktive Komponente die Verbindung der Formel

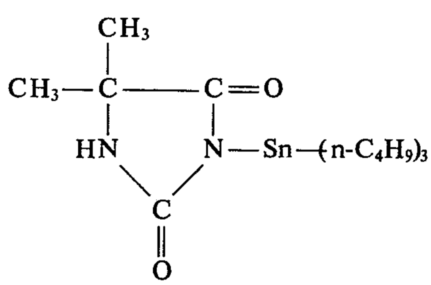

enthält.

8. Ein Mittel gemäß Anspruch 4, welches als aktive Komponente die Verbindung der Formel

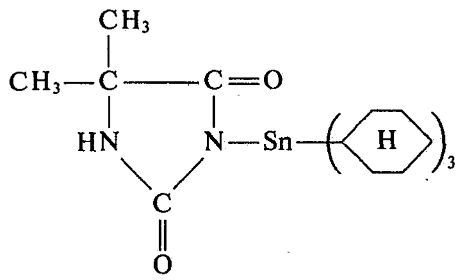

enthält.

9. Ein Mittel gemäß Anspruch 4, welches als aktive Komponente die Verbindung der Formel

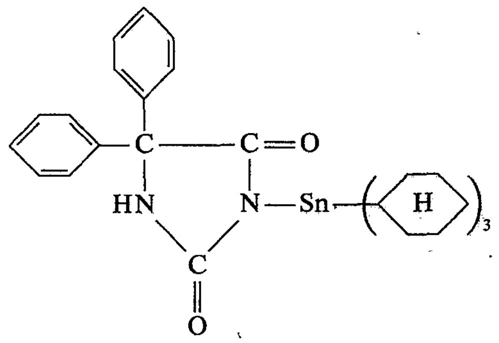

enthält.

10. Ein Mittel gemäß Anspruch 4, welches als aktive Komponente die Verbindung der Formel

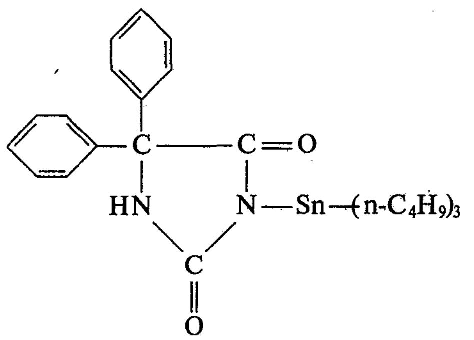

enthält.

11. Ein Mittel gemäß Anspruch 4, welches als aktive Komponente die Verbindung der Formel

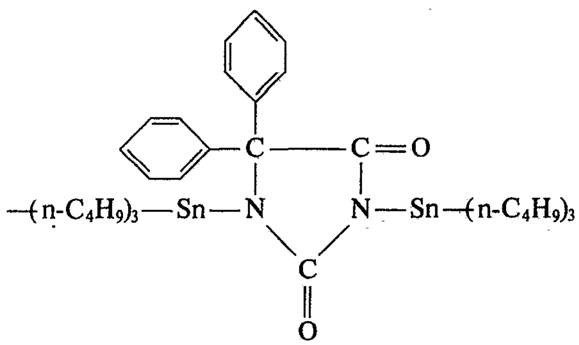

enthält.

12. Ein Mittel gemäß Anspruch 4, welches als aktive Komponente die Verbindung der Formel

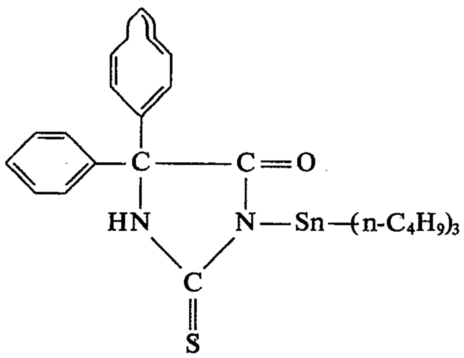

enthält.

13. Ein Mittel gemäß Anspruch 4, welches als aktive Komponente die Verbindung der Formel

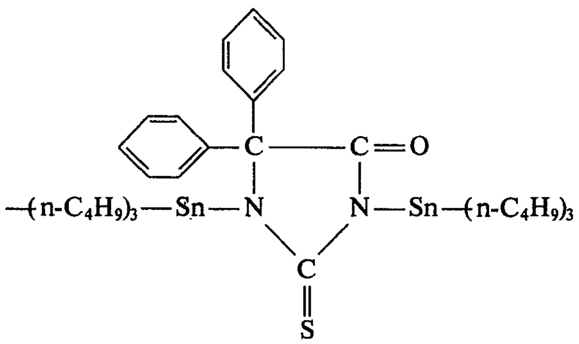

enthält.

14. Ein Mittel gemäß Anspruch 4, welches als aktive Komponente die Verbindung der Formel

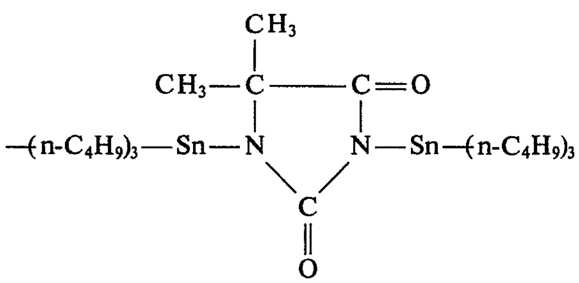

enthält.

15. Ein Mittel gemäß Anspruch 3, welches als aktive Komponente die Verbindung der Formel

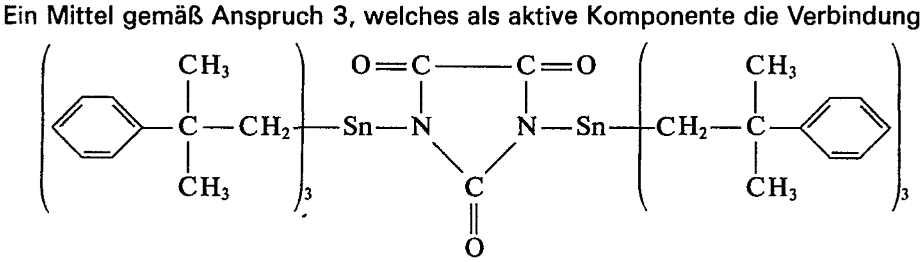

enthält.

16. Ein Mittel gemäß Anspruch 3, welches als aktive Komponente die Verbindung der Formel

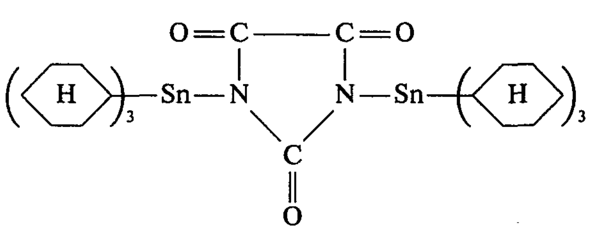

enthält.

17. Die Verwendung eines Mittels gemäß Anspruch 1 zur Bekämpfung von Schädlingen an Tieren und Pflanzen.

18. Die Verwendung gemäß Anspruch 17 zur Bekämpfung von Insekten und Vertretern der Ordnung Akarina.

19. Die Verwendung gemäß Anspruch 17 zur Bekämpfung von phytopathogenen Pilzen.

20. Verfahren zur Herstellung von Triorganozinnhydantoin-Verbindungen der Formel

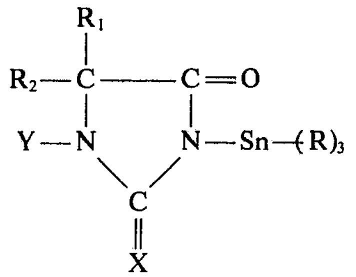

worin

R $C_1-C_8$-Alkyl, $C_5-C_8$-Cycloalkyl, Phenyl oder

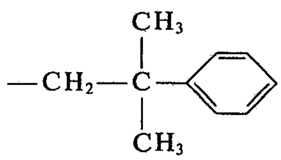

$R_1$ und $R_2$ je Wasserstoff, $C_1-C_8$-Alkyl, Phenyl, Hydroxyphenyl oder zusammen $C_5-C_7$-Alkylen oder Sauerstoff,

X Sauerstoff oder Schwefel und

Y Wasserstoff oder

$$-Sn-(R)_3$$

bedeuten,

dadurch gekennzeichnet, daß man eine Verbindung der Formel

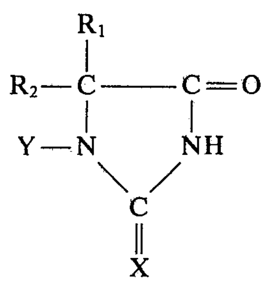

mit einer Verbindung der Formel

$$HO-Sn(R)_3 \quad bzw. \quad (R)_3-Sn-O-Sn-(R)_3$$

reagieren läßt, worin R, $R_1$, $R_2$, X und Y die oben angegebene Bedeutung haben.

**Claims for the Contracting States: BE, DE, FR, GB, IT, NL, CH, LI**

1. A triorganotin hydantoin compound of the formula

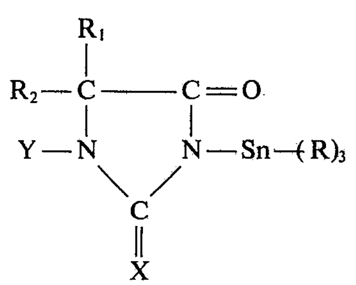

(I)

wherein
R is $C_1$—$C_8$alkyl, $C_5$—$C_8$cycloalkyl, phenyl or

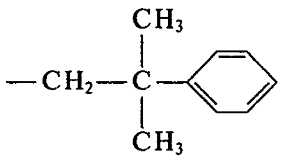

$R_1$ and $R_2$ are each hydrogen, $C_1$—$C_8$alkyl, phenyl, hydroxyphenyl or together they are $C_5$—$C_7$alkylene or oxygen,
X is oxygen or sulfur, and
Y is hydrogen or

$$—Sn—(R)_3$$

2. A compound according to claim 1, wherein
R is $C_1$—$C_4$alkyl, $C_5$—$C_6$cycloalkyl, phenyl or

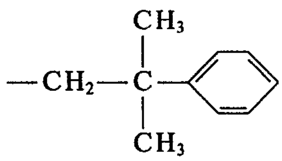

$R_1$ and $R_2$ are each methyl or phenyl, or together oxygen,
X is oxygen or sulfur, and
Y is hydrogen or

$$—Sn—(R)_3$$

3. A compound according to claim 2, wherein
R is n-butyl, cyclohexyl, phenyl or

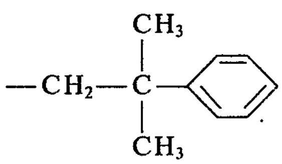

$R_1$ and $R_2$ are each methyl or phenyl, or together oxygen,
X is oxygen or sulfur,
Y is hydrogen or

$$—Sn—(R)_3$$

4. A compound according to claim 3, wherein
R is n-butyl, cyclohexyl, phenyl or

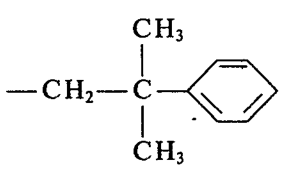

$R_1$ and $R_2$ are each methyl or phenyl,
X is oxygen or sulfur, and
Y is hydrogen or

$$—Sn—(R)_3$$

5. The compound according to claim 4 of the formula

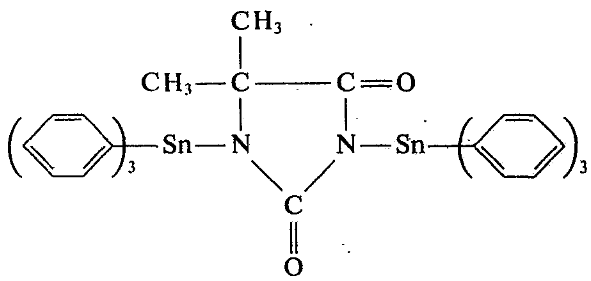

6. The compound according to claim 4 of the formula

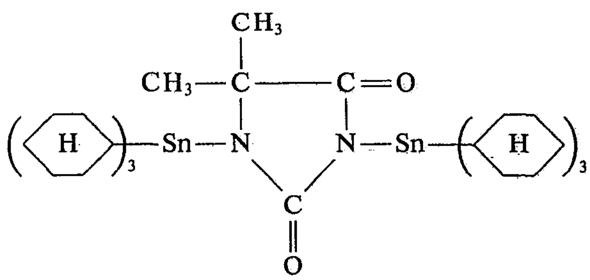

7. The compound according to claim 4 of the formula

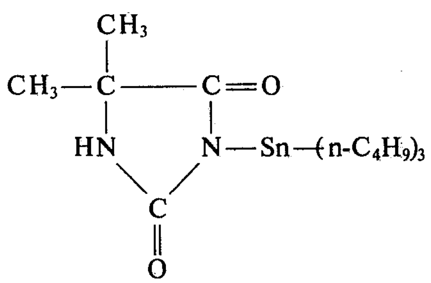

8. The compound according to claim 4 of the formula

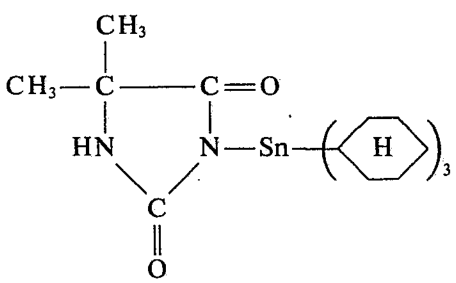

9. The compound according to claim 4 of the formula

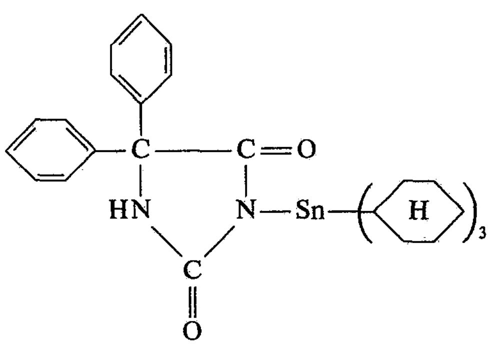

10. The compound according to claim 4 of the formula

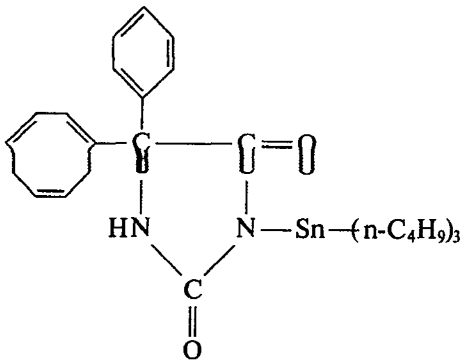

11. The compound according to claim 4 of the formula

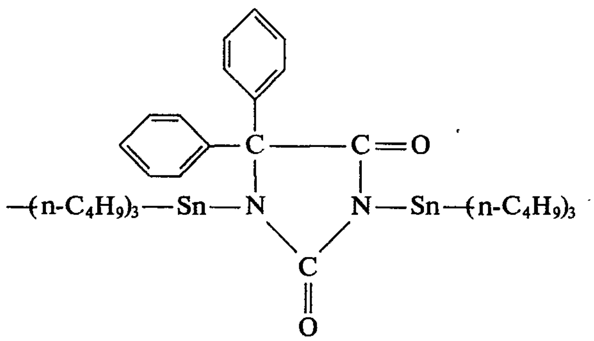

12. The compound according to claim 4 of the formula

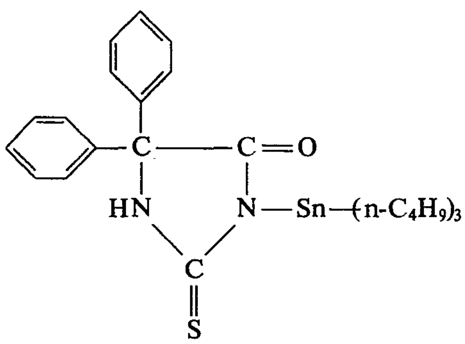

13. The compound according to claim 4 of the formula

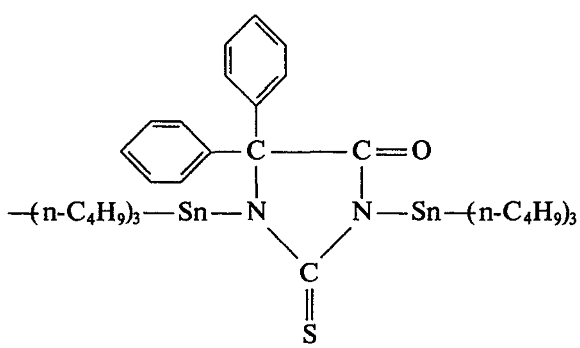

14. The compound according to claim 4 of the formula

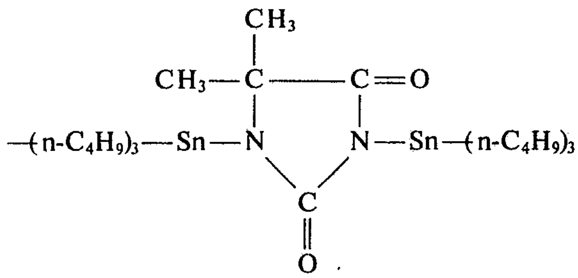

15. The compound according to claim 3 of the formula

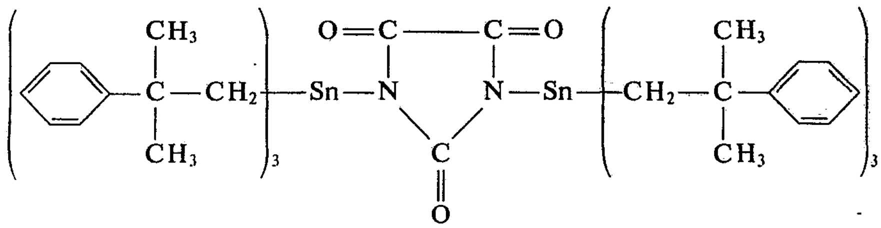

16. The compound according to claim 3 of the formula

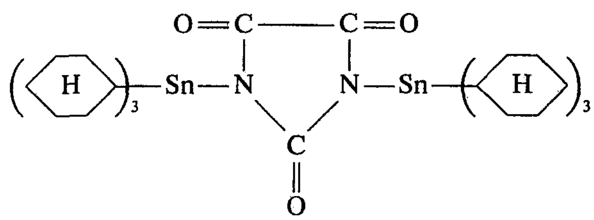

17. A process for the preparation of a compound according to claim 1, which process comprises reacting a compound of the formula

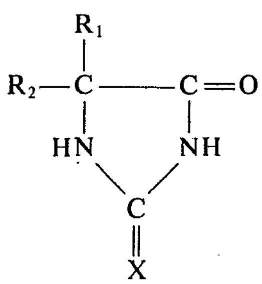

with a compound of the formula

$$HO-Sn-(R)_3 \quad \text{or} \quad (R)_3-Sn-O-Sn-(R)_3$$

wherein R, $R_1$, $R_2$ and X have the meanings defined in claim 1.

18. A pesticidal composition which contains as active ingredient a compound according to claim 1.

19. A method of controlling pests of animals and plants, which method comprises applying thereto or to the locus thereof an effective amount of a compound according to claim 1.

20. A method according to claim 19 for controlling insects and members of the order Acarina.

21. A method according to claim 19 for controlling phytopathogenic fungi.

**Claims for the Contracting State: AT**

1. A pesticide which in addition to liquid and solid adjuvants contains as active ingredient a triorganotin hydantoin compound of the formula

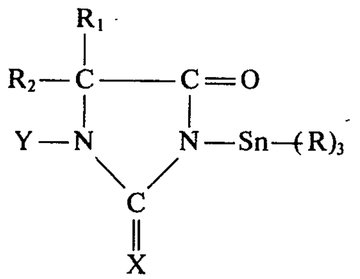

(I)

wherein
R is $C_1$—$C_8$alkyl, $C_5$—$C_8$cycloalkyl, phenyl or

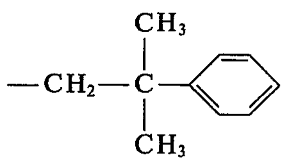

$R_1$ and $R_2$ are each hydrogen, $C_1$—$C_8$alkyl, phenyl, hydroxyphenyl, or together they are $C_5$—$C_7$alkylene or oxygen,
X is oxygen or sulfur, and
Y is hydrogen or

$$—Sn—(R)_3$$

2. A composition according to claim 1, wherein in the formula of the active ingredient
R is $C_1$—$C_4$alkyl, $C_5$—$C_6$cycloalkyl, phenyl or

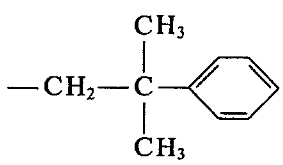

$R_1$ and $R_2$ are each methyl or phenyl, or together oxygen,
X is oxygen or sulfur, and
Y is hydrogen or

$$—Sn—(R)_3$$

3. A composition according to claim 2, wherein in the formula of the active ingredient
R is n-butyl, cyclohexyl, phenyl or

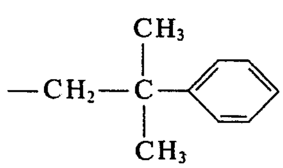

$R_1$ and $R_2$ are each methyl or phenyl, or together oxygen,
X is oxygen or sulfur,
Y is hydrogen or

$$—Sn—(R)_3$$

4. A composition according to claim 3, wherein in the formula of the active ingredient
R is n-butyl, cyclohexyl, phenyl or

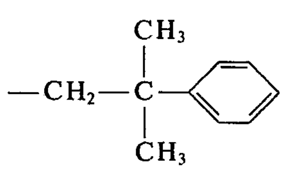

$R_1$ and $R_2$ are each methyl or phenyl,
X is oxygen or sulfur, and
Y is hydrogen or

$$-Sn-(R)_3$$

5. A composition according to claim 4 which contains as active ingredient a compound of the formula

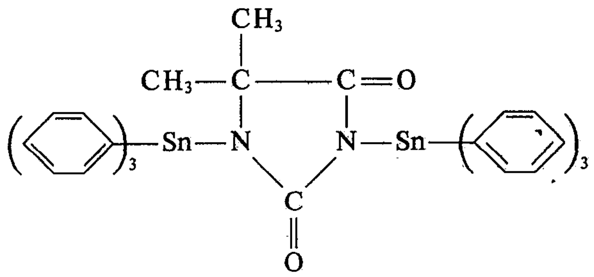

6. A composition according to claim 4 which contains as active ingredient a compound of the formula

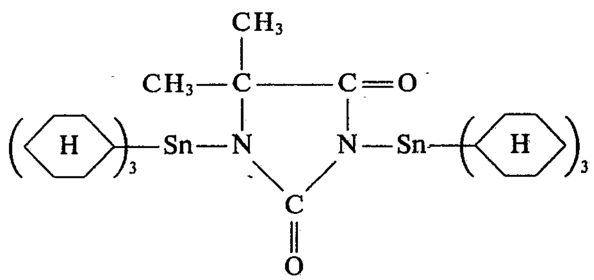

7. A composition according to claim 4 which contains as active ingredient a compound of the formula

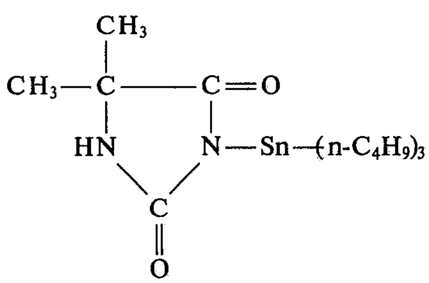

8. A composition according to claim 4 which contains as active ingredient a compound of the formula

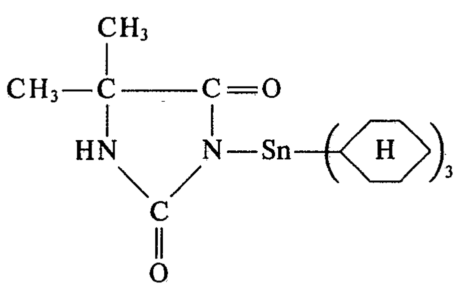

9. A composition according to claim 4 which contains as active ingredient a compound of the formula

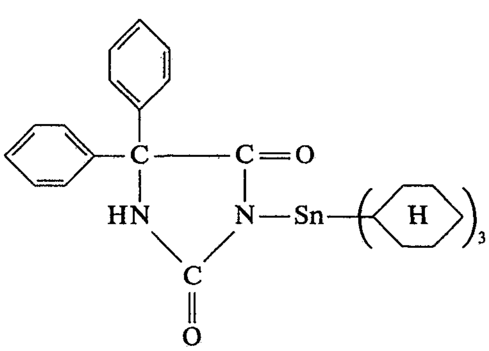

10. A composition according to claim 4 which contains as active ingredient a compound of the formula

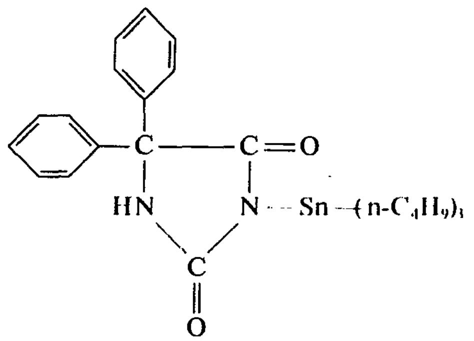

11. A composition according to claim 4 which contains as active ingredient a compound of the formula

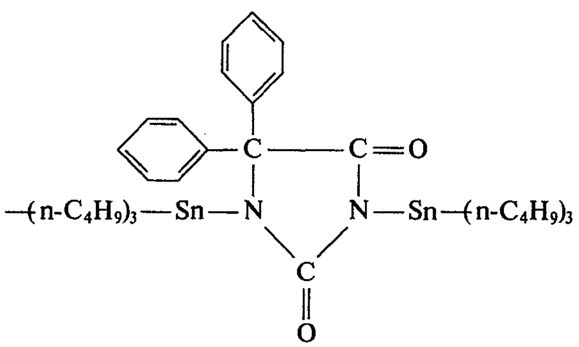

12. A composition according to claim 4 which contains as active ingredient a compound of the formula

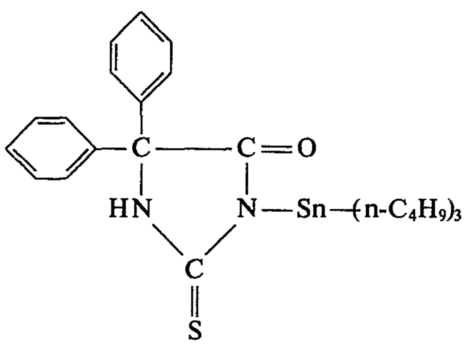

13. A composition according to claim 4 which contains as active ingredient a compound of the formula

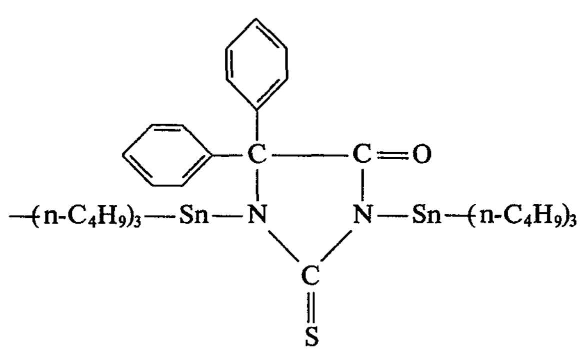

14. A composition according to claim 4 which contains as active ingredient a compound of the formula

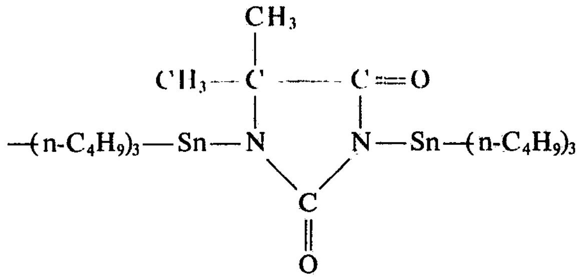

15. A composition according to claim 4 which contains as active ingredient a compound of the formula

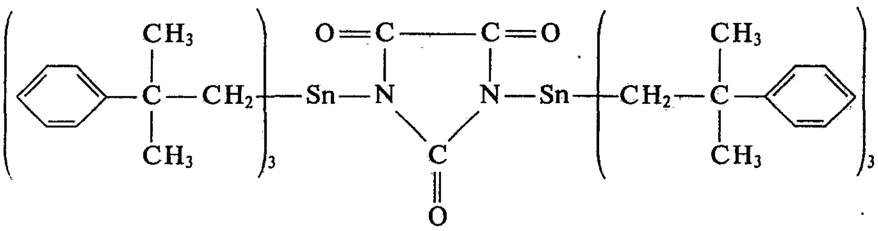

16. A composition according to claim 4 which contains as active ingredient a compound of the formula

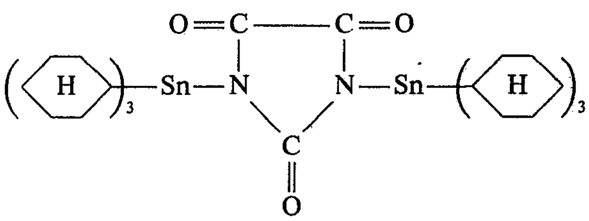

17. A method of controlling pests of animals and plants, which method comprises applying thereto or to the locus thereof an effective amount of a composition according to claim 1.

18. A method according to claim 17 for controlling insects and members of the order Acarina.

19. A method according to claim 17 for controlling phytopathogenic fungi.

20. A process for the preparation of a triorganotin hydantoin compound of the formula

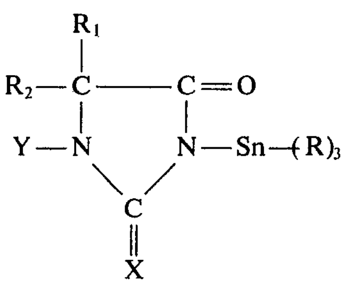

(I)

wherein

R is $C_1$—$C_8$alkyl, $C_5$—$C_8$cycloalkyl, phenyl or

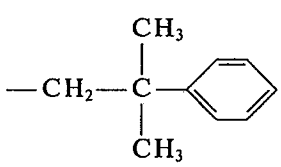

$R_1$ and $R_2$ are each hydrogen, $C_1$—$C_8$alkyl, phenyl, hydroxyphenyl, or together they are $C_5$—$C_7$alkylene or oxygen,

X is oxygen or sulfur, and

Y is hydrogen or

$—Sn—(R)_3$

which process comprises reacting a compound of the formula

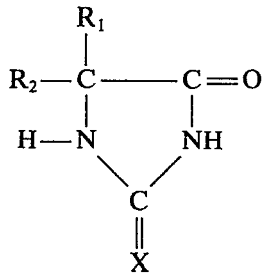

with a compound of the formula

$HO—Sn—(R)_3$ or $(R)_3—Sn—O—Sn—(R)_3$

wherein R, $R_1$, $R_2$ and X have the meanings defined above.

**Revendications pour les Etats contractants: BE, DE, FR, GB, IT, NL, CH, LI**

1. Composés de triorgano-étain-hydantoïnes de formule

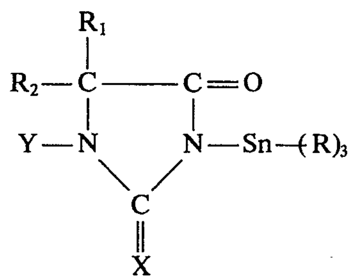

(I)

dans laquelle R représente un groupe alkyle en C 1—C 8, cycloalkyle en C 5—C 8, phényle ou

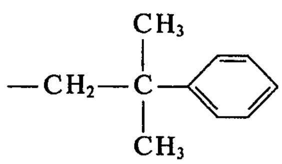

$R_1$ et $R_2$ représentent chacun l'hydrogène, un groupe alkyle en C 1—C 8, phényle, hydroxyphényle ou, ensemble, un groupe alkylène en C 5—C 7 ou l'oxygène,
X représente l'oxygène ou le soufre, et
Y représente l'hydrogène ou un groupe

$—Sn—(R)_3$

2. Un composé selon la rev. 1 dans lequel R représente un groupe alkyle en C 1—C 4, cycloalkyle en C 5—C 6, phényle ou

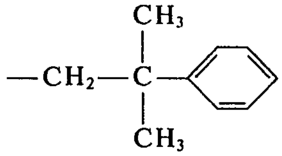

$R_1$ et $R_2$ représentent chacun un groupe méthyle, phényle ou, ensemble, l'oxygène,
X représente l'oxygène ou le soufre, et
Y représente l'hydrogène ou un groupe

$—Sn—(R)_3$

3. Un composé selon la rev. 2 dans lequel R représente un groupe n-butyle, cyclohexyle, phényle ou

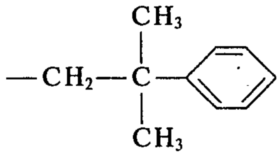

$R_1$ et $R_2$ représentent chacun un groupe méthyle, phényle ou, ensemble, l'oxygène,
X représente l'oxygène ou le soufre, et
Y représente l'hydrogène ou un groupe

$-Sn-(R)_3$

4. Un composé selon la rev. 3, dans lequel R représente un groupe n-butyle, cyclohexyle, phényle ou

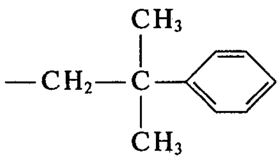

$R_1$ et $R_2$ représentent chacun un groupe méthyle ou phényle,
X représente l'oxygène ou le soufre, et
Y représente l'hydrogène ou un groupe

$-Sn-(R)_3$

5. Le composé selon la rev. 4, de formule

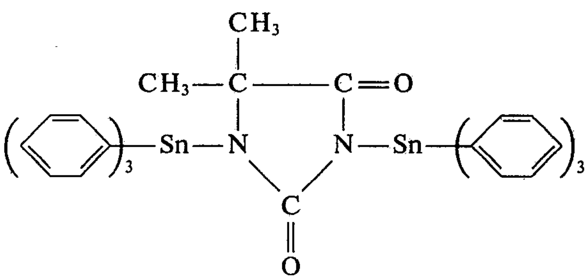

6. Le composé selon la rev. 4, de formule

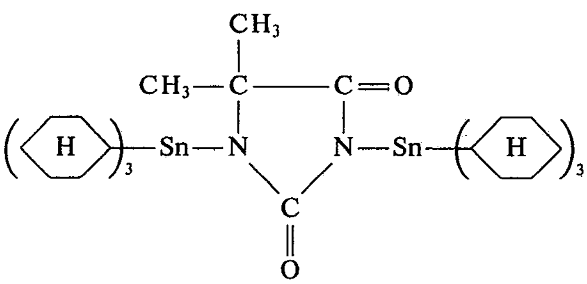

7. Le composé selon la rev. 4, de formule

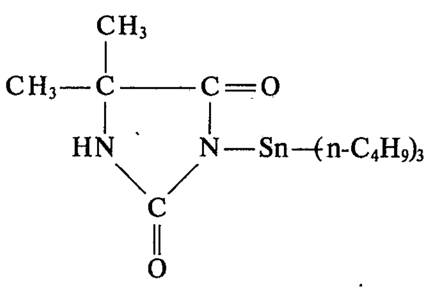

8. Le composé selon la rev. 4, de formule

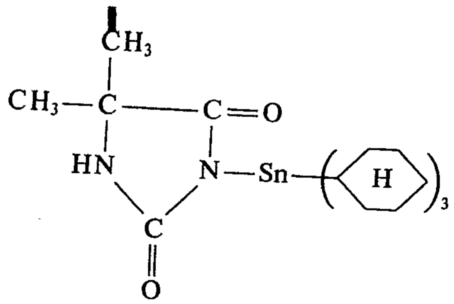

9. Le composé selon la rev. 4, de formule

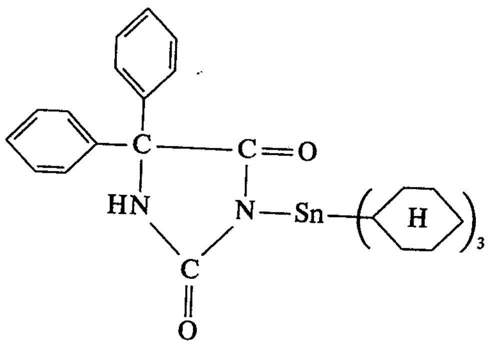

10. Le composé selon la rev. 4, de formule

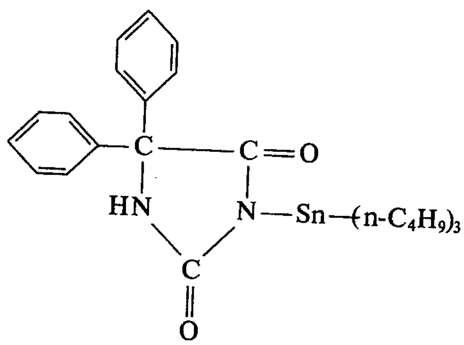

11. Le composé selon la rev. 4, de formule

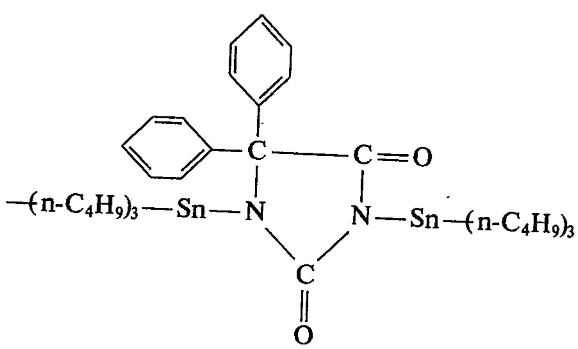

12. Le composé selon la rev. 4, de formule

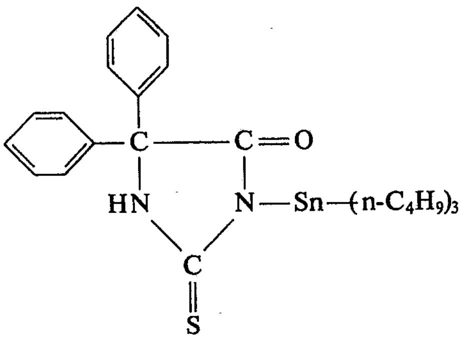

13. Le composé selon la rev. 4, de formule

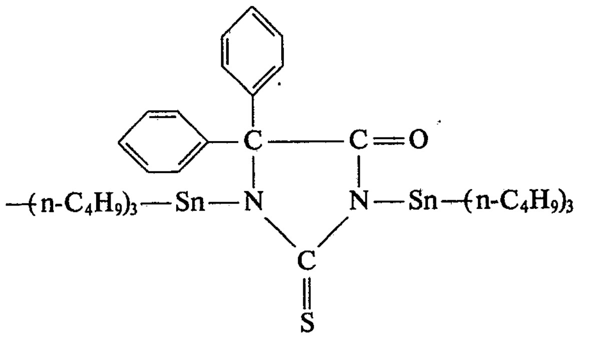

14. Le composé selon la rev. 4, de formule

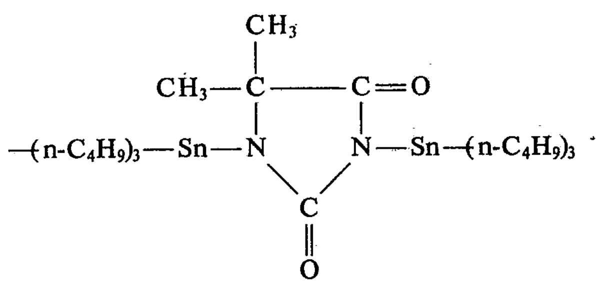

15. Le composé selon la rev. 3, de formule

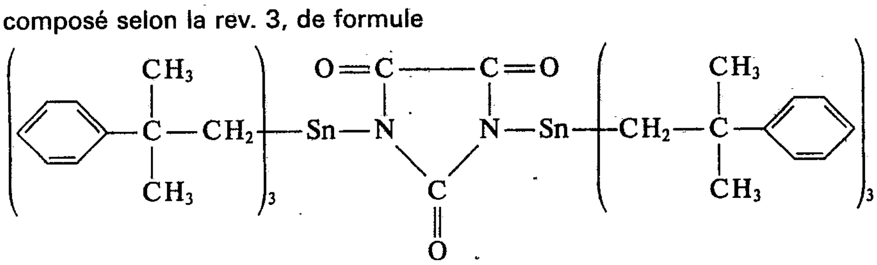

16. Le composé selon la rev. 3, de formule

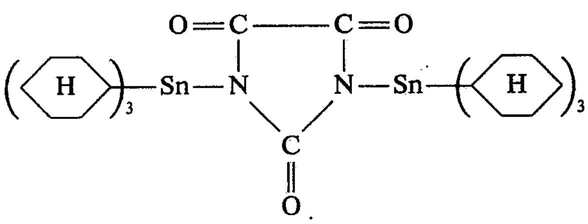

17. Procédé de préparation des composés selon la rev. 1, caractérisé en ce que l'on fait réagir un composé de formule

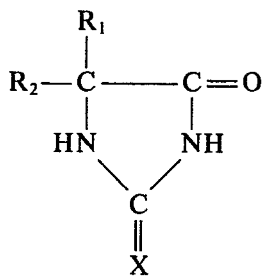

avec un composé de formule

$$HO—Sn—(R)_3 \quad \text{ou} \quad (R)_3—Sn—O—Sn—(R)_3$$

R, $R_1$, $R_2$ et X ayant les significations indiquées dans la rev. 1.

18. Un produit pesticide contenant en tant que composant actif un composé selon la rev. 1.
19. L'utilisation d'un composé selon la rev. 1 pour la lutte contre les parasites des animaux et des végétaux.
20. L'utilisation selon la rev. 19, pour la lutte contre les insectes et les représentants de l'ordre des acariens.
21. L'utilisation selon la rev. 19, pour la lutte contre les mycètes phytopathogènes.

**Revendications pour l'Etat Contractant: AT**

1. Un pesticide contenant en tant que composant actif, avec des additifs liquides et solides, un composé de triorgano-étain-hydantoïne de formule

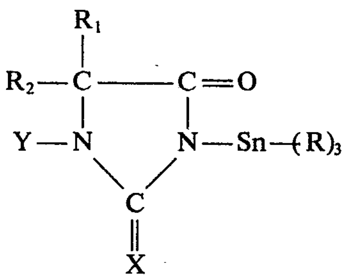

dans laquelle R représente un groupe alkyle en C 1—C 8, cycloalkyle en C 5—C 8, phényle ou

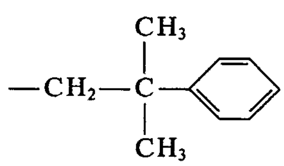

$R_1$ et $R_2$ représentent chacun l'hydrogène, un groupe alkyle en C 1—C 8, phényle, hydroxyphényle ou, ensemble, un groupe alkylène en C 5—C 7 ou l'oxygène,
X représente l'oxygène ou le soufre, et
Y représente l'hydrogène ou le groupe

$$—Sn—(R)_3$$

2. Un produit selon la rev. 1, dans lequel, dans la formule de son composant actif, R représente un groupe alkyle en C 1—C 4, cycloalkyle en C 5—C 6, phényle ou

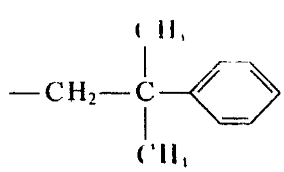

$R_1$ et $R_2$ représentent chacun un groupe méthyle, phényle ou, ensemble, l'oxygène,
X représente l'oxygène ou le soufre, et

Y représente l'hydrogène ou le groupe

$—Sn—(R)_3$

3. Un produit selon la rev. 2, dans lequel, dans la formule de son composant actif, R représente un groupe n-butyle, cyclohexyle, phényle, ou

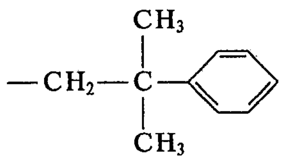

$R_1$ et $R_2$ représentent chacun un groupe méthyle, phényle, ou, ensemble, l'oxygène,
X représente l'oxygène ou le soufre, et
Y représente l'hydrogène ou le groupe

$—Sn—(R)_3$

4. Un produit selon la rev. 3, dans lequel, dans la formule de son composant actif, R représente un groupe n-butyle, cyclohexyle, phényle ou

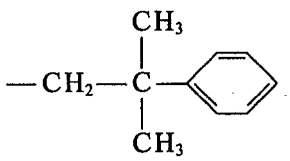

$R_1$ et $R_2$ représentent chacun un groupe méthyle ou phényle,
X représente l'oxygène ou le soufre, et
Y représente l'hydrogène ou le groupe

$—Sn—(R)_3$

5. Un produit selon la rev. 4, contenant en tant que composant actif le composé de formule

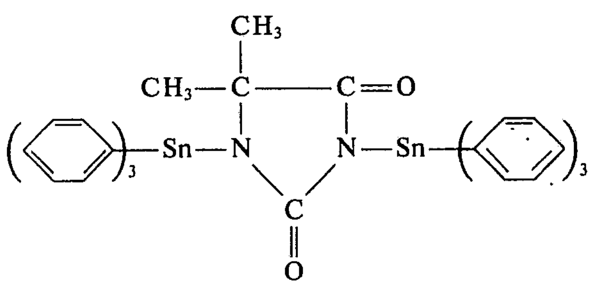

6. Un produit selon la rev. 4, contenant en tant que composant actif le composé de formule

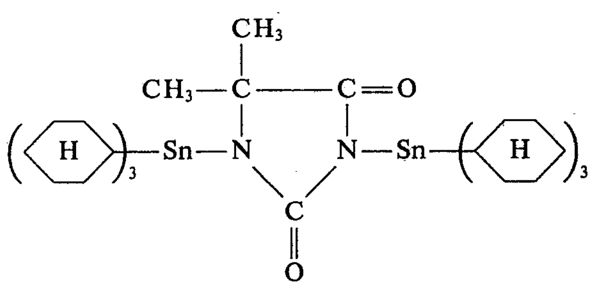

7. Un produit selon la rev. 4, contenant en tant que composant actif le composé de formule

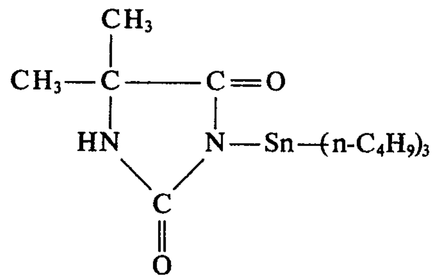

8. Un produit selon la rev. 4, contenant en tant que composant actif le composé de formule

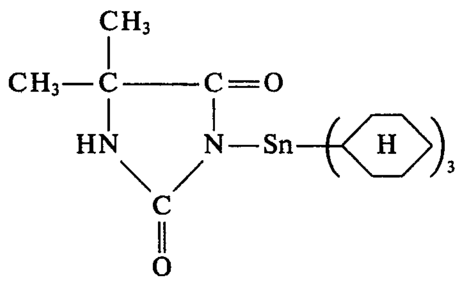

9. Un produit selon la rev. 4, contenant en tant que composant actif le composé de formule

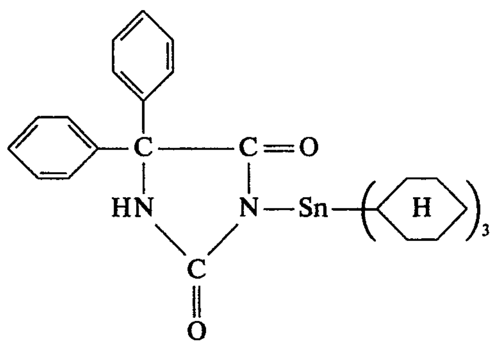

10. Un produit selon la rev. 4, contenant en tant que composant actif le composé de formule

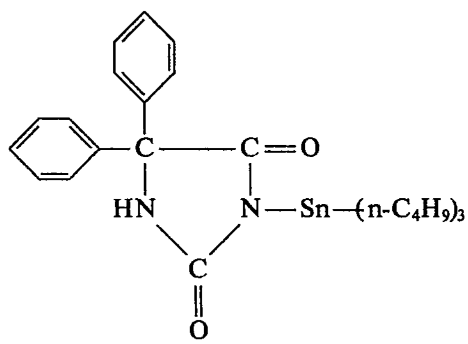

11. Un produit selon la rev. 4, contenant en tant que composant actif le composé de formule

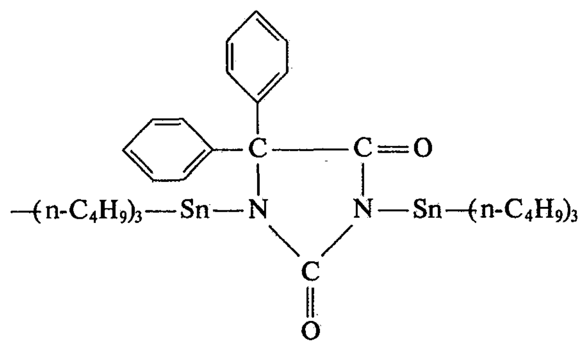

12. Un produit selon la rev. 4, contenant en tant que composant actif le composé de formule

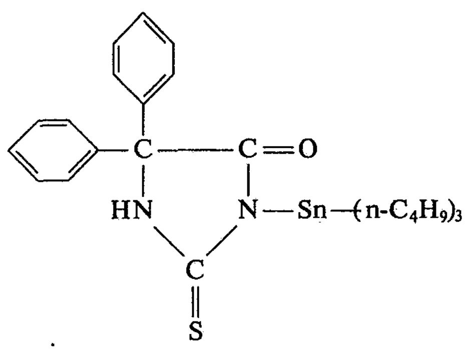

13. Un produit selon la rev. 4, contenant en tant que composant actif le composé de formule

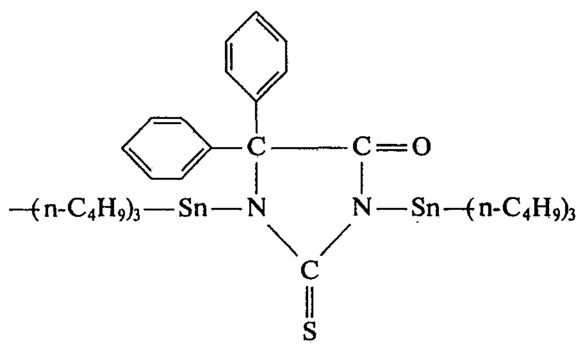

14. Un produit selon la rev. 4, contenant en tant que composant actif le composé de formule

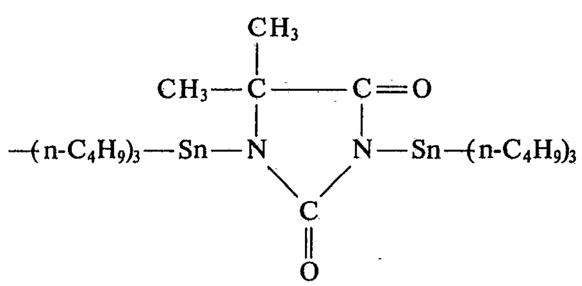

15. Un produit selon la rev. 3, contenant en tant que composant actif le composé de formule

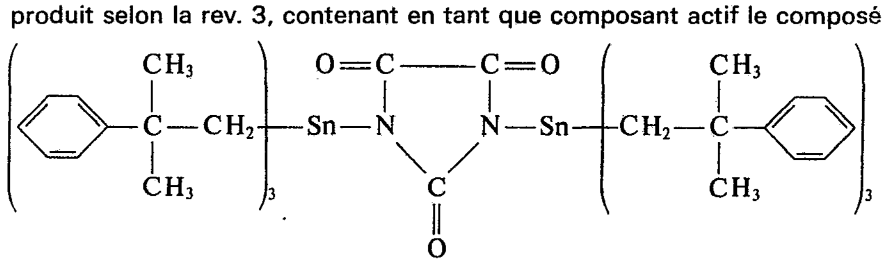

16. Un produit selon la rev. 3, contenant en tant que composant actif le composé de formule

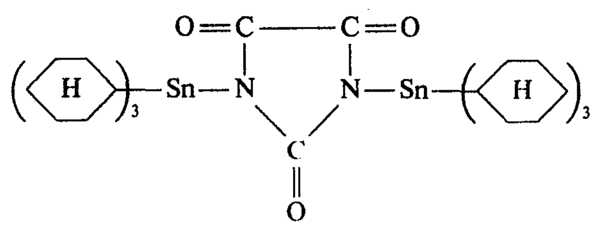

17. L'utilisation d'un produit selon la rev. 1 pour la lutte contre les parasites des animaux et des végétaux.

18. L'utilisation selon la rev. 17 pour la lutte contre les insectes et les représentants de l'ordre des acariens.

19. L'utilisation selon la rev. 17 pour la lutte contre les mycètes phytopathogènes.

20. Procédé de préparation des composés de triorgano-étain-hydantoïnes de formule

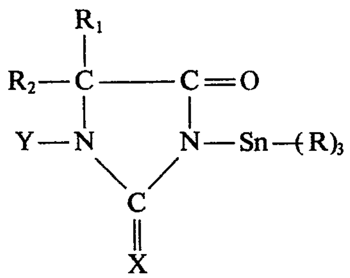

dans laquelle R représente un groupe alkyle en C 1—C 8, cycloalkyle en C 5—C 8, phényle ou

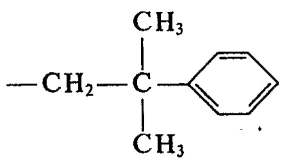

$R_1$ et $R_2$ représentent chacun l'hydrogène, un groupe alkyle en C 1—C 8, phényle, hydroxyphényle ou, ensemble, un groupe alkylène en C 5—C 7 ou l'oxygène,
X représente l'oxygène ou le soufre, et
Y représente l'hydrogène ou le groupe

$$-Sn-(R)_3$$

caractérisé en ce que l'on fait réagir un composé de formule

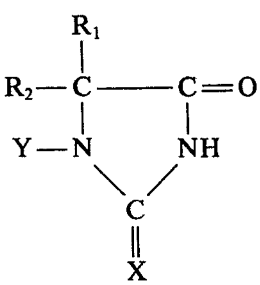

avec un composé de formule

$$HO-Sn(R)_3 \quad \text{ou} \quad (R)_3-Sn-O-Sn-(R)_3$$

R, $R_1$, $R_2$, X et Y ayant les significations indiquées ci-dessus.